(19)

Europäisches
Patentamt

European
Patent Office

Office européen
des brevets

(11) **EP 2 799 568 A1**

(12) **EUROPEAN PATENT APPLICATION**
published in accordance with Art. 153(4) EPC

(43) Date of publication:
**05.11.2014 Bulletin 2014/45**

(21) Application number: **12861856.8**

(22) Date of filing: **26.12.2012**

(51) Int Cl.:
*C22C 38/00* [(2006.01)]  *B21B 3/00* [(2006.01)]
*C21D 9/46* [(2006.01)]  *C22C 38/06* [(2006.01)]
*C22C 38/58* [(2006.01)]  *C23C 2/02* [(2006.01)]
*C23C 2/06* [(2006.01)]  *C23C 2/28* [(2006.01)]

(86) International application number:
**PCT/JP2012/008307**

(87) International publication number:
**WO 2013/099235 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2011 JP 2011284524**

(71) Applicant: **JFE Steel Corporation
Tokyo, 100-0011 (JP)**

(72) Inventors:
• **TAKAGI, Shusaku
Tokyo 100-0011 (JP)**
• **KANEKO, Shinjiro
Tokyo 100-0011 (JP)**

(74) Representative: **Hoffmann Eitle
Patent- und Rechtsanwälte PartmbB
Arabellastraße 30
81925 München (DE)**

(54) **HIGH-STRENGTH STEEL SHEET AND METHOD FOR MANUFACTURING SAME**

(57)    The present invention provides a high-strength steel sheet having a tensile strength (TS) of 980 MPa or more and also excellent bending property stably over the entire steel sheet, due to a predetermined chemical composition in combination with a specific microstructure wherein an average crystallized grain diameter of ferrite phase is 10 $\mu$m or less, a volume fraction of ferrite phase is within the range from 30 % to 70%, a volume fraction of the total of martensite and retained austenite phases is 10 % or less, and a ratio of interphases each having an interphase nano-hardness difference within 4 GPa is 90 % or more.

*FIG. 1*

Definition of Interphase Nano-Hardness Difference,
and Measurement Example 1 (Test No. 1)

Nano-hardness values measured for 50 points at each grid center.

Interphase boundary lines defined by the invention.

Boundaries with interphase nano-hardness
difference exceeding 4 GPa.

| 1.3 | 2.2 | 3.4 | 8.4 | 4.2 | 3.6 | 2.8 | 3.2 | 1.8 | 2.2 |
|-----|-----|-----|-----|-----|-----|-----|-----|------|-----|
| 2.2 | 3.5 | 5.2 | 8.3 | 6.4 | 3.3 | 3.5 | 4.2 | 10.6 | 2.4 |
| 4.3 | 2.2 | 5.4 | 5.8 | 3.8 | 4.6 | 3.9 | 2.7 | 2.4 | 2.6 |
| 3.6 | 4.3 | 5.8 | 5.2 | 4.4 | 4.0 | 6.8 | 2.3 | 1.9 | 2.2 |
| 3.6 | 3.5 | 3.7 | 4.1 | 3.0 | 3.3 | 3.4 | 4.5 | 3.6 | 3.1 |

The ratio of interphases each having an interphase nano-hardness difference within 4 GPa $= \dfrac{78}{85} \times 100 = 92\%$

Printed by Jouve, 75001 PARIS (FR)

**Description**

TECHNICAL FIELD

The present invention relates to a high-strength steel sheet being excellent in bending property and also having a tensile strength (TS) of 980 MPa or more, which can be advantageously applied to form automobile components, etc.
Here, the high-strength steel sheet of the present invention includes coated steel sheets such as a hot-dip galvanized steel sheet, etc. Further, the hot-dip galvanized steel sheet includes a so-called hot-dip galvannealed steel sheet, which is obtained by zinc or zinc alloy coating and successive hot-dip galvannealing treatment.

BACKGROUND ART

High-strength steel sheets utilized as automobile components, etc. are required, in light of characteristics of its application, to be excellent in workability, in addition to high-strength. Moreover, in recent years, high-strength steel sheets have been required for an automobile body in an increasingly wide range of applications in order to achieve higher level of fuel efficiency and collision safety and simultaneously to reduce weight of the automobile body.
However, with increasing strength of steel sheets, workability is generally apt to decrease. For this reason, upon applying high-strength steel sheets to automobile components, it is the biggest issue to be solved that steel sheets tend to cause fracture during press forming. Particularly, in the case of high-strength steel sheets having a TS of 980 MPa or more, many components are to be formed by bending, it is thus bending formability that counts in particular.
In order to fulfill the above requirements, for instance, Patent Literatures 1 to 4 disclose techniques, wherein bending property of steel sheets is improved by softening the range of 10 $\mu$m from a surface layer portion of steel sheets.
Moreover, Patent Literature 5 discloses a technique, wherein under the condition of a ferrite fraction of 60 % or more, the hardness ratio of Hnm/Hnf (Hnm: nano-hardness of low temperature transformation phase and Hnf: nano-hardness of ferrite phase) is defined to be 3.0 or more, and 2.0 or less in the case of a ferrite fraction within the range from 20 % to 50 %, for improving bending property of steel sheets. In the following, the term "nano-hardness" might be referred to as "nano-hardness degree".
Furthermore, Patent Literature 6 discloses a technique for manufacturing a high-strength hot-dip galvanized steel sheet being excellent both in workability and weldability.

CITATION LIST

Patent Literatures

PTL 1: JP2-175839A

PTL 2: JP5-195149A

PTL 3: JP10-130782A

PTL 4: JP2005-273002A

PTL 5: JP2009-167467A

PTL 6: JP2008-280608A

SUMMARY OF INVENTION

(Technical Problem)

However, according to the techniques disclosed in Patent Literatures 1 to 4, there are concerns about decrease of fatigue property of steel sheets and inhibition of stable control over volume fraction of soft phase, also. In addition, in the technique disclosed by Patent Literature 5, it is necessary to detect a ferrite fraction during manufacturing, because the ferrite fraction varies according to chemical compositions at manufacturing and annealing conditions. It is also extremely difficult to control a hardness ratio between hard and soft phases of steel sheet microstructure to the predetermined value over the entire steel sheet. Therefore, the technique disclosed by Patent Literature 5 includes the high risk that fabrication yield may be reduced, raising a possibility of increasing cost. Furthermore, the technique according to Patent Literature 6 could not realize bending property of a steel sheet sufficiently, when high-strength steel sheets were further applied to an automobile body as a steel sheet.

Here, bending property has been conventionally evaluated by measuring the smallest bending radius where generation of cracks can be avoided under the condition that the number "n" of the testpiece is determined to be approximately 3 pieces, for defining the smallest bending radius as a critical bending radius. However, as the number "n" increases, cracks could occur even within the range of not less than the critical bending radius. In addition, because components formed by press are to be formed in length of tens of centimeters or more, any part of steel sheets should be excellent in bending property.

Therefore, in order to evaluate bending property over the entire steel sheet, it is necessary to measure a critical bending radius by using more testpieces than in the past.

The present invention has been developed in view of the state of the art as stated above. Specifically, it is an object of the present invention to provide a high-strength steel sheet having a high value of a tensile strength (TS) of 980 MPa or more, and also being excellent in bending property stably over the entire steel sheets, along with an advantageous method for manufacturing the same.

(Solution to Problem)

The inventors conducted extensive study for solving the above problems. As a result, the inventors have made discoveries that a good bending property can be obtained over the entire steel sheet by defining the nano-hardness difference of adjacent phases in a microstructure.

The present invention is based on the discoveries described above.

That is, the primary aspects of the present invention are as follows:

1. A high-strength steel sheet having a chemical composition including by mass%: C: 0.05 % to 0.3 %, Si: 0.01 % to 2 %, Mn: 1.0 % to 3.5 %, P: 0.040 % or less, S: 0.0050 % or less, A1: 0.001 % to 1 % and N: 0.0060 % or less, and the balance being Fe and incidental impurities,
the steel sheet further having a microstructure, wherein an average crystallized grain diameter of ferrite phase is 10 $\mu$m or less, a volume fraction of ferrite phase is 30 % or more and 70 % or less and also a volume fraction of the total of martensite and retained austenite phases is 10 % or less, and a ratio of interphases each having an interphase nano-hardness difference within 4 GPa is 90 % or more.

2. The high-strength steel sheet according to aspect 1 above, further including by mass%, at least one element selected from Cr: 2.0 % or less, Mo: 0.50 % or less, Ni: 1.0 % or less, Cu: 1.0 % or less, and B: 0.02 % or less.

3. The high-strength steel sheet according to aspect 1 or 2 above, further including by mass%, at least one element selected from Ti: 0.10 % or less, Nb: 0.10 % or less and V: 0.10 % or less.

4. The high-strength steel sheet according to any one of aspects 1 to 3 above, further including by mass%, at least one element selected from Ca: 0.01 % or less and REM: 0.01 % or less.

5. The high-strength steel sheet according to any one of aspects 1 to 4 above, further comprising a hot-dip galvanizing layer on a surface of the steel sheet.

6. A method for manufacturing a high-strength steel sheet, the method comprising a series of steps including preparing a steel slab having the chemical composition according to any one of aspects 1 to 4 above, subjecting the steel slab to hot rolling, coiling, cold rolling and then annealing, wherein:

the hot rolling is executed under the conditions of a slab heating temperature from 1000 °C to 1300 °C and a hot-rolling finisher delivery temperature from 850 °C to 950 °C;
the hot rolling is followed by cooling with an average cooling rate from 5 °C/sec to 200 °C/sec within a temperature range from the hot-rolling finisher delivery temperature to a temperature 100 °C lower than the hot-rolling finisher delivery temperature,
the coiling is performed within a temperature range from 400 °C to 650 °C, and is followed by the cold rolling;
the annealing is performed by heating up to an annealing temperature range from 730 °C to 900 °C, holding the obtained steel sheet for 10 sec to 500 sec within the annealing temperature range, followed by a controllable cooling with an average cooling rate within a range from 1 °C/sec to 50 °C/sec down to 500 °C, and further cooling down to 300 °C or less;
the method further including reheating up to 600 °C or less and tempering under a condition where a tempering parameter $\lambda$ defined by Formula (1) below is 13000 or more;

$$\lambda = (T + 273) \times (\log(t) + 20) \cdots\cdots\cdots (1)$$

where, T: reheating temperature (°C) and t: holding time at the reheating temperature (sec).

7. The method for manufacturing a high-strength steel sheet according to aspect 6 above, wherein, instead of the controllable cooling down to 500 °C with the average cooling rate within the range from 1 °C/sec to 50 °C/sec and cooling further down to 300 °C or less, the method comprises carrying out a controllable cooling down to 500 °C with an average cooling rate within the range from 1 °C/sec to 50 °C/sec, and subsequently a hot-dip galvanizing treatment and optionally a galvannealing treatment, followed by cooling down to 300 °C or less.

(Advantageous Effect of Invention)

The present invention is capable of manufacturing a high-strength steel sheet having excellent bending property, which can thereby be advantageously utilized as a steel sheet for automobile components requiring particularly bending formability.

Here, according to the present invention, the term "high-strength" means a tensile strength (hereinafter, referred to as "TS") of 980 MPa or more. In addition, the wording "excellent bending property" means that when a critical bending radius at 90°-V bending is evaluated by 30 testpieces having a width of 30 mm respectively, thus corresponding to a steel sheet having a width of 900 mm, all testpieces can satisfy the following relationship: critical bending radius ≤ 1.5t (t : sheet thickness).

BRIEF DESCRIPTION OF THE DRAWINGS

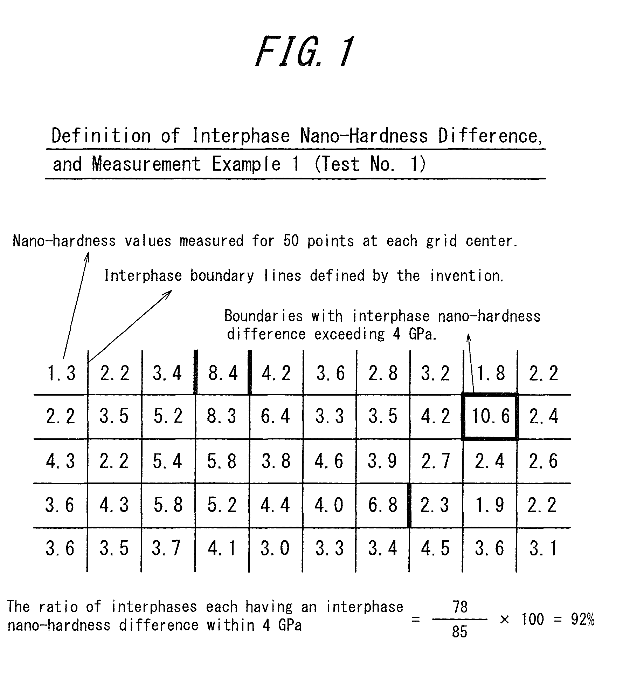

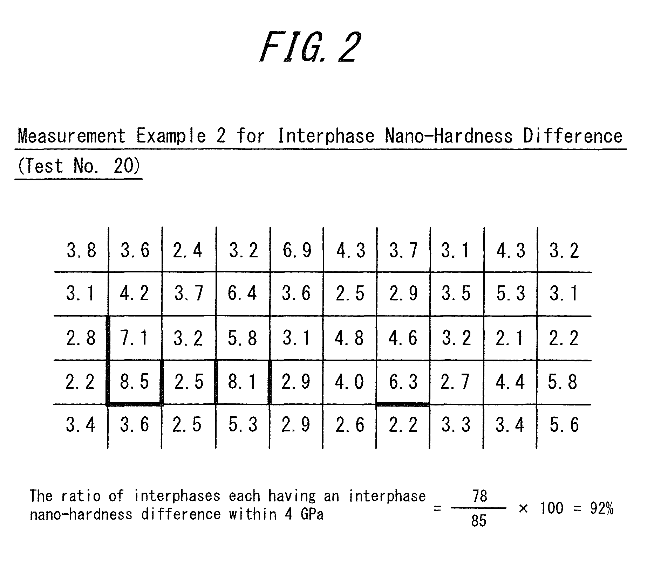

FIGS. 1 and 2 are schematic views showing the procedure for calculating the interphase hardness difference.

DESCRIPTION OF EMBODIMENTS

The present invention will be described in detail hereinafter.

**RATIO** 90 % **OR** MORE OF **INTERPHASES EACH HAVING AN INTERPHASE NANO-HARDNESS** DIFFERENCE WITHIN 4 GPa

First of all, reasons for restricting the interphase nano-hardness difference of each adjacent heterogeneous phase (hereinafter, referred to simply as "adjacent phase") are described.

When the interphase nano-hardness difference between an arbitrary phase and its adjacent phase is large, voids (defects) tend to be generated due to the difference of plastic deformability between the relevant two phases, which can be predicted from the conventional knowledge. However, a quantitative evaluation has not been made regarding in which degree of the interphase hardness difference voids tend to be generated.

Concerning the above stated quantitative evaluation, the inventors have conducted keen study. As a result, when an interphase nano-hardness difference between the relevant two phases exceeds 4 GPa, there is an extremely high possibility of void generation between the said two phases However, cracks of testpieces, namely fracture of steel sheets occurs, only when the above stated voids are connected. Therefore, even though the interphase nano-hardness difference between adjacent phases over 4 GPa is defined as disapproved, the fracture cannot be controlled in reality.

Thus, the inventors conducted further studies on the relationship between the ratio of the interphases each having an interphase nano-hardness difference from the adjacent phase exceeding 4 GPa and occurrence of connection of the voids as stated above. As a result, it has been revealed that interphase cracks are frequently generated, when the ratio of the total boundary length of adjacent phases, of which each interphase nano-hardness difference is exceeding 4 GPa, is more than 10 % relative to the total boundary length of all phases. Here, the following is the procedure how to calculate the boundary length.

First, the nano-hardness is measured by a nano-indentation test within the predetermined rage from 50 $\mu$m to 500 $\mu$m from a surface layer portion of steel sheets. It is preferred to set a measurement distance as the range from 2 $\mu$m to 3 $\mu$m. Though 50 points or more are necessary as the measuring points, it is preferred to make measurements at 300 points or more. For example, 400 square points are measured within the range from 50 $\mu$m to 500 $\mu$m from a surface of the steel sheet, by measuring 20 points at an interval from 2 $\mu$m to 3 $\mu$m in the sheet thickness direction and further measuring 20 points in the perpendicular direction thereof, configuring a grid within the said area.

Next, the nano-hardness differences of adjacent measuring points are calculated, and the total boundary length of the portions, where each interphase nano-hardness difference between adjacent phases is within 4 GPa, is calculated. A ratio of the thus obtained total boundary length is calculated relative to the total boundary length of the phases, of which nano-hardness is measured.

Here, a boundary between phases is considered to reside linearly in a center between the measuring points. When a plurality of measuring points exist within grains of the same microstructure, an average value is calculated and defined to be the nano-hardness of the phase.

FIG. 1 and FIG. 2 are schematic views showing the procedures how to calculate the hardness difference between adjacent phases. Here, the data shown in FIG. 1 and FIG. 2 are referred to as Test 1 results and Test 20 results, respectively, which are to be described below.

In this way, according to the present invention, a ratio of interphases each having an interphase nano-hardness difference within 4GPa is obtained. By defining this ratio as 90 % or more, the present invention makes it possible to manufacture steel sheets having the desired properties.

According to the present invention, it is possible to apply a conventionally well-known method for measuring the nano-hardness. For instance, the method disclosed by Japanese Patent Publication JP2006052458 can be applied. In addition, TriboScope of Hysitron Corporation, etc. can be utilized.

Specifically, when a steel sheet is 900 mm in width, 30 pieces of testpieces (each testpiece is 30 mm in width) are collected. In each testpiece, 3 points having the range of 10 mm × 10 mm are selected within the measuring points to be described below, for specifying each microstructure in the point. Next, the nano-hardness of each specified phase is measured by means of a nano-hardness tester. From the results obtained, the interphase nano-hardness difference between each adjacent phase is calculated.

Because the steel sheet of the present invention remains unchanged in hardness in the sheet thickness direction and thus homogeneous, measuring points for the nano-hardness have been selected according to the present invention in the vicinities of a surface layer, which is easily affected during forming by bending. Therefore, the measurement was executed within the area from 50 μm to 500 μm from a surface of the steel sheet, for representing the nano-hardness of the steel sheet.

Next, the reasons why the chemical composition of the steel sheet is to be restricted to the aforementioned ranges in the present invention will be described. Here, "%" of chemical compositions below represents mass% unless otherwise specified.

**C: 0.05% to 0.3%**

Carbon (C) is an element effective in increasing hardness of a microstructure, thus C is necessary at 0.05 % or more in order to obtain TS of 980 MPa or more. On the other hand, when the C content exceeds 0.3 %, spot weldability deteriorates significantly. Thus, the C content is defined to be 0.3 % or less, more preferably less than 0.2 %. Additionally in view of securing the TS of 980 MPa or more stably, the preferable C content is 0.08 % or more.

**Si: 0.01 % to 2 %**

Silicon (Si) is an element contributing to increasing strength by strengthening solid solution and increasing strain hardenability. The above effect is exhibited, when the Si content is 0.01 % or more. On the other hand, when the Si content exceeds 2%, Si is concentrated on a surface of the steel sheet as oxides, which results in poor chemical conversion treatment of cold rolled steel sheets and non-coating of zinc or zinc alloy coated steel sheets. (Non-coating might be referred to as "bear spot".) Therefore, the Si content is defined to be within the range from 0.01 % to 2 %. In addition, because Si inhibits softening after generation of hard phase, the Si content is preferably lower, namely to be 1.5 % or less, and more preferably 0.5 % or less.

**Mn: 1.0 % to 3.5 %**

Manganese (Mn) contributes effectively to increasing strength and the effect is acknowledged by the Mn content of 1.0 % or more. On the other hand, when the Mn contents exceeds 3.5 % or more excessively, owing to Mn segregation, transformation points vary partially within a microstructure, resulting thus in the non-uniform microstructure, where ferrite phase and martensite phase exist in an inhomogeneous band structure. As a result, bending property of a steel sheet (hereinafter, referred to simply as "bending property") is decreased and moreover, Mn is concentrated on a surface of the steel sheet as oxides, which results in poor chemical conversion treatment and non-coating. Therefore, the Mn content is defined to be 3.5 % or less, and preferably 3.0 % or less. In view of securing strength stably, the preferable Mn content is 1.5 % or more.

**P ≤ 0.040 %**

Phosphorus (P) is an element contributing to increasing strength. However, on the other hand, P is also an element degrading weldability. When the P content exceeds 0.040 %, the adverse effect for degrading weldability appears significantly. On the other hand, it is not particularly necessary to set up the lower limit of the P content. However, the excessively low content of P involves increase of manufacturing cost in steel manufacturing processes. Therefore, the P content is preferably 0.001 % or more. In addition, the preferable upper limit of the P content is defined to be 0.025 %, and more preferably 0.015 % or less.

**S ≤ 0.0050 %**

An increased content of sulfur (S) causes hot red shortness. Moreover, S forms MnS inclusion that becomes platy inclusion after cold rolling, which thereby decreases the ultimate deformability of materials and formabilities such as stretch flangeability, etc. Therefore the S content may preferably be reduced to minimum. However, the S content is acceptable up to 0.0050 %. On the other hand, the excessively low content of S involves increase in desulfurizing cost in steel manufacturing processes. Therefore, the S content is preferably 0.0001 % or more, and the preferable upper limit is 0.0030 %.

**Al: 0.001 % to 1 %**

Aluminum (Al) is effective as a deoxidizer in steel manufacturing processes and also an element effective in separating non-metallic inclusions decreasing bending property in slag. Moreover, Al has the effect for suppressing generation of Mn or Si oxides at a surface layer, which inhibits coating property, thereby appearance of a coated surface will be improved. In order to obtain the effect, it is necessary to add Al at 0.001% or more. On the other hand, when Al is added over 1 %, cost for steel components is increased and in addition, weldability is decreased. Therefore, the Al content is defined to be within the range from 0.001 % to 1 %. Preferably, the Al content is within the range from 0.01 % to 0.06 %.

**N ≤ 0.0060 %**

Nitrogen (N) does not affect material properties of steels, which is strengthened in its microstructures, so much. Thus, the N content of 0.0060 % or less does not adversely affect the effects of the present invention. On the other hand, in view of improving ductility by cleaning ferrite, the N content is desirably low. However, because steel manufacturing cost is increased, the lower limit of the N content is desirably 0.0001 % approximately.

According to the present invention, in addition to the above described basic components, the optional components to be stated below can be added as necessary.

**Cr ≤ 2.0 %**

Chromium (Cr) is an element effective in strengthening steel quenching. In addition to the capability of obtaining high-strength easily by improving quench hardenability of austenite, hard phases are distributed finely and uniformly, thus Cr contributes also to improving formability effectively. In order to obtain the effects, Cr is desirably added at 0.01 % or more. On the other hand, the Cr content exceeding 2.0 % causes saturation of the effects and degrades surface quality significantly. Therefore, when Cr is added, the Cr content is defined to be 2.0 % or less, preferably within the range from 0.01 % to 2.0 %, and more preferably within the range from 0.2 % to 1.0 %.

**Mo ≤ 0.50 %**

Molybdenum (Mo) is an element effective in strengthening steel quenching. In addition, Mo ensures strength of low carbon components easily and improves also weldability. In order to obtain the effects, Mo is desirably added at 0.01 % or more. On the other hand, the Mo content exceeding 0.50 % causes saturation of the effects, becoming the factor for increasing cost. Therefore, when Mo is added, the Mo content is defined to be 0.50 % or less, preferably within the range from 0.01 % to 0.50 %, and more preferably within the range from 0.01 % to 0.35 %.

**Ni ≤ 1.0 %**

Nickel (Ni) is an element effective for strengthening steel quenching. In addition, Ni ensures strength of low carbon components easily and improves also weldability. In order to obtain the effects, Ni is desirably added at 0.01 % or more. On the other hand, the Ni content exceeding 1.0 % causes saturation of the effects, becoming the factor for increasing cost. Therefore, when Ni is added, the Ni content is defined to be 1.0 % or less, preferably within the range from 0.01 % to 1.0 %, and more preferably within the range from 0.01 % to 0.5 %.

**Cu $\leq$ 1.0 %**

Copper (Cu) is an element effective for strengthening steel quenching. In addition, Cu ensures strength of low carbon components easily and improves also weldability. In order to obtain the effects, Cu is desirably added at 0.01 % or more. On the other hand, the Cu content exceeding 1.0 % causes saturation of the effects, becoming the factor for increasing cost. Therefore, when Cu is added, the Cu content is defined to be 1.0 % or less, preferably within the range from 0.01 % to 1.0 %, and more preferably within the range from 0.01 % to 0.5 %.

**B $\leq$ 0.02 %**

Boron (B) increases quench hardenability and suppresses generation of ferrite arising during cooling at an annealing process, thus contributing to obtaining the desired amount of martensite. In order to obtain the effect, the B content is preferably 0.0001 % or more. On the other hand, the B content exceeding 0.02 % causes saturation of the effect. Therefore, when B is added, the B content is defined to be 0.02 % or less, preferably within the range from 0.0001 % to 0.02 %, and more preferably within the range from 0.0005 % to 0.0030 %.

**Ti $\leq$ 0.10 %**

Titanium (Ti) affects effectively grain refining and strengthening precipitation of a microstructure of a hot rolled steel sheet and a steel sheet microstructure after annealing, by forming fine carbides and nitrides with C or N in steel. Especially, grain refining of a microstructure leads to improvement of steel sheet bending and elongation. In order to obtain the effects, Ti is desirably added at 0.010 % or more. However, the Ti content exceeding 0.10 % causes saturation of the effect. In addition, there is then the concern that ferrite ductility may be decreased due to excessive generation of precipitates of fine carbides and nitrides in ferrite. Therefore, when Ti is added, the Ti content is defined to be 0.10 % or less, preferably within the range from 0.010 % to 0.10 %, and more preferably within the range from 0.010 % to 0.060 %.

**Nb $\leq$ 0.10 %**

Niobium (Nb) is an element contributing to improving strength by solid solution strengthening or precipitation strengthening. In addition, Nb contributes to refining of ferrite grains and grains within bainite and martensite areas, thus improving bending property and elongation. The effects can be easily obtained by the Nb content of 0.010 % or more. However, when Nb is added excessively over 0.10 %, a hot rolled sheet is hardened, thus causing increase of rolling load at hot and cold rollings, and also causing decrease of ferrite ductility, leading to deterioration of bending property. Therefore, when Nb is added, the Nb content is defined to be 0.10 % or less, desirably within the range from 0.010 % to 0.10 %. Here, in views of strength and workability, the Nb content is more preferably within the range from 0.030 % to 0.070 %.

**V $\leq$ 0.10 %**

Vanadium (V) affects effectively grain refining and strengthening precipitation of a microstructure of a hot rolled steel sheet and a steel sheet microstructure after annealing by forming fine carbides and nitrides with C or N in steel. Especially, grain refining of a microstructure leads to improvement of bending and elongation of a steel sheet. In order to obtain the effects, V is desirably added at 0.001 % or more. However, the V content exceeding 0.10 % causes saturation of the effect. In addition, excessive formation of precipitates in ferrite decreases ferrite ductility. Therefore, when V is added, the V content is defined to be 0.10 % or less, preferably within the range from 0.001 % to 0.10 %, and more preferably within the range from 0.010 % to 0.060 %.

**Ca $\leq$ 0.01 %**

Calcium (Ca) has the effect for improving bending property by controlling forms of sulfides such as MnS, etc. In order to obtain the effect, the Ca content is preferably added at 0.0001 % or more. On the other hand, the excessive Ca content tends to cause saturation of the effect. Therefore, when Ca is added, the C content is defined to be 0.01 % or less, preferably within the range from 0.0001 % to 0.01 %, more preferably within the range from 0.0001 % to 0.0050 % and further more preferably within the range from 0.0001 % to 0.0020 %.

**REM ≤ 0.01 %**

Rare earth metal (REM) has the effect for improving bending property by controlling forms of sulfides such as MnS, etc. However, the excessive REM content tends to cause saturation of the effect. Therefore, when REM is added, the REM content is defined to be 0.01 % or less, preferably within the range from 0.0001 % to 0.01 %, more preferably within the range from 0.0001 % to 0.0020 %.

In order to obtain the desired bending property and weldability, the steel sheet of the present invention is comprised of the above stated chemical composition, with the balance being Fe and incidental impurities. However, in addition to the aforementioned, the following elements may be optionally contained as necessary;

Antimony (Sb) has the effect for regulating crystal grains at a surface layer of the steel sheet without significantly changing the coating property. Sb may be contained within the range from 0.0001 % to 0.1 %.

In addition, Zr, Mg, etc. form precipitates, thus the contents thereof may preferably be reduced to minimum. And it is not necessary to add Zr and Mg positively, however each may be contained within the range less than 0.020 %, and more preferably within the range less than 0.002 %.

Next, a limited range of the steel microstructure and the grounds for limitation in the present invention will be described hereinafter.

**AVERAGE CRYSTALLIZED GRAIN DIAMETER 10 μm OR LESS AND VOLUME FRACTION FROM 30 % TO 70 %** OF FERRITE PHASE

Because strain is extremely concentrated in a coarsened ferrite phase having a crystallized grain diameter over 10 μm, an average grain diameter of ferrite phase exceeding 10 μm decreases the bending property of the steel sheet. In addition, in the case of a volume fraction of ferrite phase less than 30 %, even when the ratio of interphases each having an interphase nano-hardness difference between adjacent phases within 4 GPa is kept at 90 % or more, the desired bending property may not be obtained due to excessive concentration of strain into a ferrite phase portion. On the other hand, when the volume fraction of ferrite phase exceeds 70 %, it is difficult to ensure TS of 980 MPa. Therefore, the average crystallized grain diameter of ferrite phase is defined to be 10 μm or less and the volume fraction of ferrite phase needs to be within the range from 30 % to 70 %. An average crystallized grain diameter of ferrite phase is preferably 5 μm or less. On the other hand, a volume fraction of ferrite phase is preferably 40 % or more.

Here, in the present invention, the volume fraction of the steel sheet microstructure refers to the volume fraction of a phase concerned, relative to the entire steel sheet microstructure.

**VOLUME FRACTION 10 % OR LESS OF THE TOTAL OF MARTENSITE AND RETAINED AUSTENITE PHASES**

Because martensite phase is extremely hard, bending property is decreased with an increasing volume fraction thereof. In addition, though retained austenite phase is softer than martensite phase, the retained austenite phase is transformed into the martensite phase during bending deformation, thus decreasing bending property eventually. Therefore, according to the present invention, the predetermined bending property can be achieved by defining the total of the two as 10 % or less in volume fraction, preferably 5 % or less, more preferably 3 % or less and 0 % even acceptable. Here, according to the present invention, the martensite phase means a hard martensite phase that is not tempered, which can be specified by SEM observation.

According to the present invention, a crystallized grain diameter of the phases of martensite and retained austenite in a steel sheet microstructure is not particularly limited. However, a crystallized grain diameter thereof is preferred to be finer, for instance, preferably about 5 μm or less.

In the present invention, besides the ferrite, martensite and retained austenite phases as earlier described, there are phases to be contained possibly, such as phases of tempered martensite, bainite, pearlite, cementite, etc. These phases, excluding the earlier described ferrite, martensite and retained austenite phases, can be contained in total within the range from 30 % to 70 %.

In addition, the high-strength steel sheet of the present invention can be manufactured as a coated steel sheet, such as a hot-dip galvanized steel sheet having a hot-dip galvanizing layer formed on a surface of the steel sheet.

Next, a manufacturing method of the present invention will be described.

First, molten steel having the aforementioned chemical composition is subjected to continuous casting or ingot casting-rolling process, to thereby manufacture slabs. Next, the obtained slab is cooled and then re-heated. Or without heating treatment after casting, the slab can be directly subjected to hot rolling. In this hot rolling, a slab heating temperature is set within the range from 1000 °C to 1300 °C for homogenizing a microstructure of the hot rolled sheet. And a hot-rolling finisher delivery temperature is defined to be within the range from 850 °C to 950 °C for improving workabilities such as elongation, stretch flangeability, etc. and thus for homogenizing a microstructure of the hot rolled sheet by suppressing generation of band structure consisting of two phases of ferrite and pearlite.

Moreover, the hot rolling is followed by cooling with an average cooling rate from 5 °C/sec to 200 °C/sec within a temperature range from the hot-rolling finisher delivery temperature to a temperature 100 °C lower than the hot-rolling finisher delivery temperature. And a coiling is performed within a temperature range from 400 °C to 650 °C for improving surface appearance quality and cold rolling property. After finishing the hot rolling, pickling is executed and then the desired sheet thickness is obtained by cold rolling. Here, a reduction ratio of the cold rolling is desirably 30 % or more, for improving bending property by promoting recrystallization of ferrite phase. A thickness of the steel sheet of the present invention is defined to be within the range form 0.6 mm to 3.6 mm approximately.

Furthermore, when a cold rolled steel sheet is manufactured according to the present invention, following the aforementioned processes, annealing is performed by heating up to an annealing temperature range from 730 °C to 900 °C, holding the obtained steel sheet for 10 sec to 500 sec within the annealing temperature range, followed by a controllable cooling with an average cooling rate within a range from 1 °C/sec to 50 °C/sec down to 500 °C, and further cooling down to 300 °C or less. The method further includes reheating up to 600 °C or less and tempering under a condition where a tempering parameter λ, defined by Formula (1) below is 13000 or more;

$$\lambda = (T + 273) \times (\log(t) + 20) \cdots\cdots \cdots\cdots (1)$$

where, T: reheating temperature (°C), and t: holding time at the reheating temperature (sec).

The present invention includes a so-called hot-dip galvanized steel sheet having a hot-dip galvanizing layer formed on a surface of the steel sheet. When a hot-dip galvanized steel sheet is manufactured, following the aforementioned processes, a hot-dip galvanizing can be executed by a method that is commonly known.

In this case, a controllable cooling is carried out down to 500 °C with the average cooling rate as earlier stated, and subsequently a hot-dip galvanizing treatment and optionally a galvannealing treatment, followed by cooling down to 300 °C or less. Afterwards, it is most preferable that the obtained steel sheet is reheated up to a range of 600 °C or less, and subjected to a tempering process under the condition that the above stated tempering parameter λ, is 13000 or more.

In this manner, the desired hot-dip galvanized steel sheet having high-strength can be obtained. Moreover, the obtained steel sheet after tempering may further be subjected to skin pass rolling as required.

Next, limited ranges of the above stated manufacturing conditions and reasons for the specific limitation will be described hereafter.

**SLAB HEATING TEMPERATURE: 1000 °C TO 1300 °C**

A slab heating temperature less than 1000 °C lowers effects of scaling off for reducing voids in a slab surface layer, defects such as segregation, cracks on a surface of the steel sheet and also surface unevenness. On the other hand, a heating temperature exceeding 1300 °C causes saturation of the above effects, resulting in increase of cost. Therefore, the slab heating temperature is defined to be within the range from 1000 °C to 1300 °C.

HOT-ROLLING FINISHER DELIVERY TEMPERATURE: **850 °C TO 950 °C**

When a hot-rolling finisher delivery temperature is 850 °C or more, bending property can be improved. On the other hand, in the case of a hot-rolling finisher delivery temperature less than 850 °C, a steel sheet after hot rolling contains worked microstructure where its grains have been deformed by extension. Thus, Mn, as an austenite-stabilizing element, tends to be segregated in cast pieces, causing decrease of $Ar_3$ transformation point within the segregation area.

As stated above, when the $Ar_3$ transformation point is decreased, an un-recrystallization temperature range conforms to a temperature where the rolling is completed. As a result, un-recrystallized austenite is generated in a microstructure after hot rolling. In this manner, when the non-uniform microstructure, containing un-recrystallized austenite, is formed, it is thereby extremely difficult to obtain excellent bending property, because uniform deformation is inhibited during working materials.

On the other hand, when a hot-rolling finisher delivery temperature exceeds 950 °C, generation amount of oxides (hot rolling scales) increases drastically, thus an interface between a steel substrate and oxides becomes rough. As a result, surface quality after pickling or cold rolling is degraded. In addition, after pickling, when the above stated hot rolling scales remain un-scaled off partly, resistance spot weldability is thereby badly affected. Moreover, a crystallized grain diameter is excessively coarsened, thus causing surface deterioration upon being pressed Therefore, the hot-rolling finisher delivery temperature is within the range from 850 °C to 950 °C, preferably within the range from 880 °C, to 930 °C.

**AVERAGE COOLING RATE IN HIGH TEMPERATURE RANGE: 5 °C/SEC TO 200 °C/SEC**

In the high temperature range just after finish rolling (hereinafter, which means the temperature range "from the hot-rolling finisher delivery temperature to a temperature 100 °C lower than the hot-rolling finisher delivery temperature"), when a cooling rate is less than 5 °C/sec, recrystallization and grain growth occur after hot rolling. Thus a crystallized grain diameter of a microstructure of a hot rolled sheet is coarsened and also a so-called band structure is formed, wherein ferrite phase and martensite phase are formed in layers. When such a band structure is formed before annealing, heat treatment cannot help but be executed under the condition where component concentration varies. Thus, at heat treatment during annealing process, it is difficult to eliminate microstructure unevenness derived from variation in concentration, decreasing thereby bending property. Therefore, the average cooling rate within the above high temperature range is defined to be 5 °C/sec or more. On the other hand, when an average cooling rate within the above high temperature range exceeds 200 °C/sec, the effect tends to be saturated. Therefore, the average cooling rate in the above temperature range is defined to be within the range from 5 °C/sec to 200 °C/sec.

**COILING TEMPERATURE: 400 °C TO 650 °C**

When a coiling temperature exceeds 650 °C, hot rolling scale thickness is increased, thus causing surface roughness after pickling and cold rolling, which leads to formation of unevenness and moreover decrease of bending property, due to coarsening of ferrite grain diameter. In addition, when hot rolling scales remain after pickling, resistance spot weldability is badly affected. On the other hand, a coiling temperature less than 400 °C increases strength of a hot rolled sheet, and also increases load at cold rolling, which leads to decrease of productivity. Therefore, the coiling temperature is defined to be within the range from 400 °C to 650 °C.

**ANNEALING TEMPERATURE: 730 °C TO 900 °C AND HOLDING TIME: 10 SEC TO 500 SEC**

When an annealing temperature is less than 730 °C, austenite is not sufficiently generated during annealing, thus strength of a steel sheet cannot be secured. On the other hand, an annealing temperature exceeding 900 °C coarsens austenite during heating and thus decreases an amount of ferrite phase to be generated at successive cooling process, bending property is thereby decreased. Therefore, the annealing temperature is defined to be within the range from 730 °C to 900 °C.

In addition, when a holding time within the above stated annealing process is less than 10 sec, generation amount of austenite phase during annealing is reduced, thus leading to difficulty in securing steel sheet strength. On the other hand, long annealing tends to cause crystal grain growth and coarsening thereof. A holding time within the above annealing temperature range exceeding 500 sec causes saturation of the effect, resulting in increase of cost. Therefore, the holding time is defined to be within the range from 10 sec to 500 sec, and preferably to be within the range from 20 sec to 200 sec.

**AVERAGE COOLING RATE FROM ANNEALING TEMPERATURE To 500 °C: 1 °C/SEC TO 50 °C/SEC** (when cold rolled steel sheet is manufactured.)

An average cooling rate after annealing down to 500 °C plays an important role in controlling volume fraction of ferrite phase and ensuring TS of a grade of 980 MPa or more. According to the present invention, a cooling after annealing, performed with a controlled cooling rate, is referred to as "controllable cooling". When the average cooling rate of the controllable cooling is less than 1 °C/sec, an amount of ferrite phase to be generated during cooling processes is increased, and pearlite is also increased, with the result that TS cannot be secured. On the other hand, an average cooling rate exceeding 50 °C/sec causes difficulty in uniform cooling over the entire steel sheet, leading to unevenness of bending property. Therefore, the above stated average cooling rate is defined to be within the range from 1 °C/sec to 50 °C/sec, preferably from 5 °C/sec to 30 °C/sec.

The cooling in this instance is preferably carried out by gas cooling. However, it is possible to employ furnace cooling, mist cooling, roll-chilling, water cooling, or any combination thereof.

**CONTROLLABLE COOLING FROM ANNEALING TEMPERATURE TO 500 °C WITH AVERAGE COOLING RATE FROM 1 °C/SEC TO 50 °C/SEC, AND SUCCESSIVE HOT-DIP GALVANIZING TREATMENT AND OPTIONAL GALVANNEALING TREATMENT** (when hot-dip galvanized steel sheet is manufactured.)

The average cooling after annealing down to 500 °C remains same as the case for manufacturing the above stated cold rolled steel sheet. However, in view of securing coating property, the controllable cooling in this case is preferably executed by means of gas cooling.

After stopping the above cooling, a general hot-dip galvanizing treatment is carried out for obtaining a hot-dip galvanized steel sheet. Optionally and as necessary, after the above hot-dip galvanizing treatment, a galvannealing treatment is executed by reheating by means of an induction heating device, etc. for obtaining a hot-dip galvannealed steel sheet. Here, treatment conditions for executing a hot-dip galvanizing treatment can be performed in accordance with conventional techniques. For instance, a plating bath temperature is within the range of 450 °C to 460 °C approximately, and a galvannealing treatment temperature can be set, for example, as about 500 °C.

A coating amount of hot-dip galvanizing per one surface is desirably within the range from 20 g/m² to 150 g/m², approximately. This is, because a coating amount less than 20 g/m² causes difficulty in securing corrosion resistance property. On the other hand, when a coating amount exceeds 150 g/m², corrosion resistance effect is saturated, but resulting rather in increase of cost.

**COOLING TO 300 °C OR LESS, AND SUCCESSIVE REHEATING TO 600 °C OR LESS AND TEMPERING WITH TEMPERING PARAMETER λ OF 13000 OR MORE**

During the cooling including the controllable cooling after the above stated annealing, to the temperature range over 300 °C, untransformed austenite remains greatly in a steel sheet, thus austenite tends to be disassembled into ferrite and cementite. Therefore, it is difficult to ensure a TS of 980 MPa by re-heating. Accordingly, after the above stated annealing, a cooling is executed down to 300 °C or less. It is preferred to cool down to 50 °C or less for achieving the condition where austenite is reduced to minimum and to reheat from this condition.

In addition, even though the cooling after the annealing is executed down to 300 °C or less, there is a possibility that a large amount of martensite may remain after cooling, when the above stated tempering parameter λ (hereinafter, referred to just as "λ") is small.

After the above stated cooling, reheating is executed for softening hard martensite or bainite up to the predetermined hardness. However, heating over 600 °C causes saturation of the effect, leading thus to increase of cost. In addition, in the case of a hot-dip galvanized steel sheet, alloying reaction between base iron and zinc is accelerated excessively, thus coating layer tends to come off easily. Therefore, the reheating is executed up to 600 °C or less. The lowest reheating temperature is not particularly defined. However, even over a cooling stop temperature, in the case of an excessively low temperature, holding time becomes very long, leading to decrease of productivity. Therefore, the reheating is preferably executed up to about 350 °C or more, approximately.

In addition, under the condition where the above stated λ is less than 13000, hard phase is not sufficiently softened, thereby bending property cannot be obtained sufficiently. That is why, with the condition where λ is increasing, hard phase becomes softer, thus bending property is improved further. Therefore, λ is preferably 14000 or more, further preferably 15000 or more. Here, in view of securing TS, the upper limit of λ is preferably 17000 approximately.

The steel sheet eventually obtained after a continuous annealing may be subjected to temper rolling for the purpose of form correction and surface roughness adjustment. However, an excessive skin pass rolling causes a rolled worked microstructure, having excessive strain and crystallized grains deformed by extension, thus leading to a possible case where bending property is decreased. Therefore, a reduction ratio of skin pass is preferably within the range from 0.1 % to 1.5 % approximately.

(Example 1)

Steel samples having respective chemical composition shown in Table 1 were smelted to obtain slabs. According to various conditions shown in Table 2, each obtained slab was then subjected to hot rolling, pickling, cold rolling by a reduction ratio of 50 %, continuous annealing or further coating treatment, in order to obtain a steel sheet having a sheet thickness of 1.4 mm. By a coating treatment, a hot-dip galvanized steel sheet or a hot-dip galvannealed steel sheet were obtained having a coating amount per one surface of 45 g/m². In addition, molten bath temperature and galvannealing treatment temperature were defined to be 460 °C and 500 °C respectively.

Material properties of each steel sheet sample thus obtained were investigated by material tests to be described below.

The results obtained by the tests are shown in Table 3. Here, phases excluding phases of ferrite, martensite and retained austenite shown in Table 3, were of bainite or tempered martensite.

(Table 1)

Table 1

| Steel type | Chemical composition (mass%) | | | | | | | | | | | | | | | | | Remarks |
|---|---|---|---|---|---|---|---|---|---|---|---|---|---|---|---|---|---|---|
| | C | Si | Mn | P | S | Al | N | Cr | Mo | Ni | Cu | B | Ti | Nb | V | Ca | REM | |
| A | 0.12 | 0.41 | 3.24 | 0.015 | 0.0030 | 0.038 | 0.0051 | - | - | - | - | - | - | - | - | - | - | Conforming steel |
| B | 0.15 | 0.50 | 2.84 | 0.013 | 0.0029 | 0.035 | 0.0034 | - | - | - | - | - | - | - | - | - | - | Conforming steel |
| C | 0.18 | 0.82 | 2.59 | 0.014 | 0.0024 | 0.036 | 0.0035 | - | - | - | - | - | - | - | - | - | - | Conforming steel |
| D | 0.11 | 1.11 | 2.76 | 0.009 | 0.0026 | 0.034 | 0.0041 | - | - | - | - | - | - | - | - | - | - | Conforming steel |
| E | 0.13 | 0.29 | 3.09 | 0.016 | 0.0034 | 0.041 | 0.0042 | - | - | - | - | - | - | - | - | - | - | Conforming steel |
| F | 0.07 | 0.27 | 3.30 | 0.022 | 0.0038 | 0.042 | 0.0031 | - | - | - | - | - | - | - | - | - | - | Conforming steel |
| G | 0.20 | 0.73 | 3.24 | 0.023 | 0.0027 | 0.035 | 0.0038 | - | - | - | - | - | - | - | - | - | - | Conforming steel |
| H | 0.10 | 0.14 | 3.05 | 0.017 | 0.0016 | 0.037 | 0.0037 | - | - | - | - | - | - | - | - | - | - | Conforming steel |
| I | 0.08 | 0.43 | 2.93 | 0.016 | 0.0024 | 0.031 | 0.0026 | 0.10 | - | - | - | - | - | - | - | - | - | Conforming steel |
| J | 0.16 | 0.62 | 1.83 | 0.008 | 0.0031 | 0.025 | 0.0029 | - | 0.22 | - | - | - | - | - | - | - | - | Conforming steel |
| K | 0.18 | 1.48 | 2.52 | 0.013 | 0.0038 | 0.026 | 0.0031 | - | - | 0.32 | - | - | - | - | - | - | - | Conformingsteef |
| L | 0.07 | 0.99 | 2.22 | 0.010 | 0.0024 | 0.034 | 0.0028 | - | - | - | 0.54 | - | - | - | - | - | - | Conforming steel |
| M | 0.14 | 0.09 | 2.84 | 0.011 | 0.0026 | 0.028 | 0.0034 | - | - | - | - | 0.0010 | - | - | - | - | - | Conforming steel |
| N | 0.15 | 0.40 | 3.01 | 0.016 | 0.0020 | 0.034 | 0.0035 | - | - | - | - | - | 0.052 | - | - | - | - | Conforming steel |
| O | 0.12 | 0.31 | 2.92 | 0.018 | 0.0021 | 0.026 | 0.0035 | - | - | - | - | - | - | 0.049 | - | - | - | Conforming steel |
| P | 0.11 | 0.23 | 3.32 | 0.020 | 0.0017 | 0.025 | 0.0027 | - | - | - | - | - | - | - | 0.077 | - | - | Conforming steel |
| Q | 0.25 | 0.57 | 2.51 | 0.022 | 0.0019 | 0.021 | 0.0041 | - | - | - | - | - | - | - | - | 0.0020 | - | Conforming steel |
| R | 0.22 | 0.75 | 2.72 | 0.009 | 0.0022 | 0.026 | 0.0040 | - | - | - | - | - | - | - | - | - | 0.0010 | Conforming steel |
| S | 0.08 | 0.10 | 3.31 | 0.016 | 0.0024 | 0.030 | 0.0042 | - | - | - | - | - | - | - | - | - | - | Conforming steel |
| T | 0.11 | 0.26 | 2.82 | 0.014 | 0.0035 | 0.036 | 0.0039 | - | - | - | - | - | - | - | - | - | - | Conforming steel |
| U | 0.18 | 0.24 | 3.09 | 0.021 | 0.0026 | 0.034 | 0.0038 | - | - | - | - | - | - | - | - | - | - | Conforming steel |
| V | 0.09 | 0.13 | 2.44 | 0.013 | 0.0037 | 0.033 | 0.0027 | 0.23 | - | - | - | - | - | - | - | - | - | Conforming steel |
| W | 0.11 | 0.12 | 2.16 | 0.022 | 0.0015 | 0.029 | 0.0044 | - | 0.14 | - | - | - | - | - | - | - | - | Conforming steel |
| X | 0.12 | 0.04 | 2.90 | 0.019 | 0.0028 | 0.026 | 0.0028 | 0.13 | - | - | - | - | - | 0.061 | - | - | - | Conforming steel |

| Steel type | Chemical composition (mass%) | | | | | | | | | | | | | | | | | Remarks |
|---|---|---|---|---|---|---|---|---|---|---|---|---|---|---|---|---|---|---|
| | C | Si | Mn | P | S | Al | N | Cr | Mo | Ni | Cu | B | Ti | Nb | V | Ca | REM | |
| Y | 0.03 | 0.44 | 3.28 | 0.008 | 0.0009 | 0.030 | 0.0032 | - | - | - | - | - | - | - | - | - | - | Comparative steel |
| Z | 0.25 | 0.53 | 0.84 | 0.009 | 0.0013 | 0.027 | 0.0036 | - | - | - | - | - | - | - | - | - | - | Comparative steel |
| AA | 0.11 | 0.34 | 2.58 | 0.016 | 0.0010 | 0.032 | 0.0022 | - | - | 0.15 | - | - | 0.024 | - | - | - | - | Conforming steel |
| AB | 0.14 | 0.06 | 3.10 | 0.019 | 0.0022 | 0.570 | 0.0031 | - | - | - | 014 | - | - | - | - | 0.0022 | - | Confoming steel |
| AC | 0.12 | 0.46 | 1.92 | 0.022 | 0.0038 | 0.370 | 0.0041 | 0.35 | - | - | - | - | - | 0.028 | - | - | 0.0014 | Conforming steel |
| AD | 0.09 | 0.22 | 2.38 | 0.009 | 0.0018 | 0.026 | 0.0024 | 0.58 | 0.09 | - | - | 0.0008 | 0.019 | 0.034 | - | - | - | Conforming steel |
| AE | 0.07 | 0.92 | 2.94 | 0.012 | 0.0024 | 0.120 | 0.0044 | - | - | - | - | - | - | 0.052 | - | 0.0030 | - | Conforming steel |

(Table 2)

Table 2

| Test No. | Steel type | Slab heating temp. (°C) | Hot-rolling finisher delivery temp. (°C) | Average cooling rate* from finisher delivery temp. (°C/s) | Coiling temp (°C) | Annealing temp. (°C) | Holding time (s) | Average cooling rate down to 500 °C after holding (°C/s) | Cooling stop temp.** (°C) | Reheating temp. (°C) | Holding time of reheating (s) | Tempering parameter λ | Skin pass (%) | Zn coating | Galvannealing | Remarks |
|---|---|---|---|---|---|---|---|---|---|---|---|---|---|---|---|---|
| 1 | A | 1200 | 900 | 50 | 600 | 820 | 60 | 10 | 25 | 420 | 120 | 15301 | 0.3 | No | - | Inventive example |
| 2 | B | 1100 | 880 | 30 | 610 | 800 | 80 | 5 | 25 | 450 | 90 | 15873 | 0.3 | No | - | Inventive example |
| 3 | B | 1100 | 830 | 30 | 610 | 800 | 80 | 5 | 25 | 450 | 90 | 15873 | 0.3 | No | - | Comparative example |
| 4 | C | 1150 | 850 | 70 | 580 | 810 | 30 | 10 | 50 | 350 | 60 | 13568 | 0.3 | No | - | Inventive example |
| 5 | C | 1150 | 850 | 2 | 580 | 810 | 30 | 10 | 50 | 350 | 60 | 13568 | 0.3 | No | - | Comparative example |
| 6 | D | 1170 | 860 | 80 | 550 | 780 | 100 | 12 | 25 | 400 | 240 | 15062 | 0.3 | No | - | Inventive example |
| 7 | D | 1170 | 860 | 80 | 700 | 780 | 100 | 12 | 25 | 400 | 240 | 15062 | 0.3 | No | - | Comparative example |
| 8 | E | 1180 | 920 | 100 | 450 | 850 | 120 | 20 | 30 | 450 | 10 | 15183 | 0.3 | No | - | Inventive example |
| 9 | E | 1180 | 920 | 100 | 450 | 920 | 120 | 20 | 30 | 450 | 10 | 15183 | 0.3 | No | - | Comparative example |
| 10 | E | 1180 | 920 | 100 | 450 | 700 | 120 | 20 | 30 | 450 | 10 | 15183 | 0.3 | No | - | Comparative example |
| 11 | F | 1250 | 890 | 60 | 500 | 840 | 90 | 7 | 180 | 400 | 300 | 15127 | 0.3 | No | - | Inventive example |
| 12 | F | 1250 | 890 | 60 | 500 | 840 | 5 | 7 | 180 | 400 | 300 | 15127 | 0.3 | No | - | Comparative example |

| Test No. | Steel type | Slab heating temp. (°C) | Hot-rolling finisher delivery temp. (°C) | Average cooling rate* from finisher delivery temp. (°C/s) | Coiling temp (°C) | Annealing temp. (°C) | Holding time (s) | Average cooling rate down to 500 °C after holding (°C/s) | Cooling stop temp.** (°C) | Reheating temp. (°C) | Holding time of reheating (s) | Tempering parameter λ | Skin pass (%) | Zn coating | Galvanneal-ing | Remarks |
|---|---|---|---|---|---|---|---|---|---|---|---|---|---|---|---|---|
| 13 | G | 1230 | 870 | 80 | 520 | 850 | 180 | 15 | 25 | 375 | 600 | 14760 | 0.3 | No | - | Inventive example |
| 14 | G | 1230 | 870 | 80 | 520 | 850 | 180 | M | 25 | 375 | 600 | 14760 | 0.3 | No | - | Comparative example |
| 15 | H | 1050 | 880 | 70 | 560 | 830 | 100 | 15 | 200 | 500 | 5 | 16000 | 0.3 | No | - | Inventive example |
| 16 | H | 1050 | 880 | 70 | 560 | 830 | 100 | 15 | 350 | 500 | 5 | 16000 | 0.3 | No | - | Comparative example |
| 17 | I | 1120 | 860 | 30 | 590 | 870 | 75 | 15 | 100 | 450 | 30 | 15528 | 0.3 | No | - | Inventive example |
| 18 | J | 1220 | 900 | 120 | 600 | 790 | 80 | 25 | 180 | 350 | 300 | 14003 | 0.3 | No | - | Inventive example |
| 19 | J | 1220 | 900 | 120 | 600 | 790 | 80 | 25 | 180 | 350 | 5 | <u>12895</u> | 0.3 | No | - | Comparative example |
| 20 | K | 1230 | 910 | 90 | 580 | 770 | 100 | 30 | 150 | 400 | 80 | 14741 | 0.3 | No | - | Inventive example |
| 21 | L | 1260 | 930 | 100 | 550 | 800 | 100 | 15 | 150 | 350 | 600 | 14191 | 0.3 | No | - | Inventive example |
| 22 | M | 1250 | 940 | 80 | 540 | 840 | 300 | 10 | 60 | 450 | 20 | 15401 | 0.3 | No | - | Inventive example |
| 23 | N | 1240 | 860 | 80 | 560 | 860 | 240 | 8 | 60 | 500 | 10 | 16233 | 0.3 | No | - | Inventive example |
| 24 | O | 1270 | 870 | 50 | 570 | 880 | 90 | 7 | 90 | 450 | 30 | 15528 | 0.3 | No | - | Inventive example |

| Test No. | Steel type | Slab heating temp. (°C) | Hot-rolling finisher delivery temp. (°C) | Average cooling rate* from finisher delivery temp. (°C/s) | Coiling temp (°C) | Annealing temp. (°C) | Holding time (s) | Average cooling rate down to 500 °C after holding (°C/s) | Cooling stop temp.** (°C) | Reheating temp. (°C) | Holding time of reheating (s) | Tempering parameter λ | Skin pass (%) | Zn coating | Galvanneal-ing | Remarks |
|---|---|---|---|---|---|---|---|---|---|---|---|---|---|---|---|---|
| 25 | P | 1180 | 890 | 60 | 500 | 790 | 60 | 10 | 80 | 375 | 60 | 14112 | 0.3 | No | - | Inventive example |
| 26 | Q | 1190 | 900 | 40 | 480 | 780 | 80 | 15 | 120 | 425 | 10 | 14658 | 0.3 | No | - | Inventive example |
| 27 | R | 1200 | 900 | 70 | 460 | 800 | 50 | 15 | 150 | 360 | 10 | 13293 | 0.3 | No | - | Inventive example |
| 28 | S | 1200 | 890 | 60 | 420 | 820 | 40 | 20 | 250 | 360 | 10 | 13293 | 0.3 | Yes | Yes | Inventive example |
| 29 | T | 1230 | 890 | 50 | 430 | 820 | 150 | 20 | 25 | 400 | 120 | 14859 | 0.3 | Yes | Yes | Inventive example |
| 30 | U | 1230 | 880 | 70 | 500 | 830 | 120 | 15 | 25 | 450 | 100 | 15906 | 0.3 | Yes | Yes | Inventive example |
| 31 | V | 1250 | 860 | 70 | 460 | 830 | 120 | 15 | 100 | 350 | 60 | 13568 | 0.3 | Yes | Yes | Inventive example |
| 32 | W | 1260 | 870 | 60 | 480 | 800 | 60 | 10 | 120 | 450 | 60 | 15746 | 0.3 | Yes | No | Inventive example |
| 33 | X | 1240 | 890 | 30 | 490 | 800 | 90 | 10 | 150 | 400 | 30 | 14454 | 0.3 | Yes | No | Inventive example |
| 34 | Y | 1200 | 900 | 30 | 460 | 790 | 90 | 10 | 25 | 450 | 30 | 15528 | 0.3 | No | - | Comparative example |
| 35 | Z | 1200 | 920 | 30 | 420 | 780 | 80 | 10 | 25 | 450 | 30 | 15528 | 0.3 | No | - | Comparative example |
| 36 | AA | 1250 | 880 | 50 | 580 | 800 | 60 | 15 | 200 | 420 | 60 | 15092 | 0.3 | No | - | Inventive example |

| Test No. | Steel type | Slab heating temp. (°C) | Hot-rolling finisher delivery temp. (°C) | Average cooling rate* from finisher delivery temp. (°C/s) | Coiling temp (°C) | Annealing temp. (°C) | Holding time (s) | Average cooling rate down to 500 °C after holding (°C/s) | Cooling stop temp.** (°C) | Reheating temp. (°C) | Holding time of re-heating (s) | Tempering parameter λ | Skin pass (%) | Zn coat-ing | Galvanneal-ing | Remarks |
|---|---|---|---|---|---|---|---|---|---|---|---|---|---|---|---|---|
| 37 | AB | 1230 | 920 | 40 | 550 | 770 | 90 | 25 | 250 | 320 | 120 | 13093 | 0.3 | Yes | Yes | Inventive example |
| 38 | AC | 1210 | 900 | 50 | 600 | 830 | 100 | 10 | 150 | 350 | 180 | 13865 | 0.3 | Yes | No | Inventive example |
| 39 | AD | 1240 | 900 | 50 | 530 | 800 | 60 | 15 | 180 | 460 | 45 | 15872 | 0.3 | Yes | Yes | Inventive example |
| 40 | AE | 1180 | 910 | 60 | 520 | 840 | 60 | 7 | 25 | 400 | 480 | 15264 | 0.3 | No | - | Inventive example |

* Average cooling rate within the temperature range from the hot-rolling finisher delivery temperature to a temperature 100 °C lower than the hot-rolling finisher delivery temperature.
** Cooling stop temperature at cooling down to 300 °C or less.

Here, evaluation methods for material tests and material properties are as follows;.

(1) Microstructure of a steel sheet

Because the steel sheet of the present invention is homogeneous in the sheet thickness direction, SEM photographs of a surface layer portion were taken with the magnification range from 1000 to 3000 at a cross-section in parallel with the rolling direction, for observing a steel sheet microstructure within the area of 50 $\mu$m to 200 $\mu$m approximately from a surface of the steel sheet or from an interface between the steel sheet and a zinc or zinc alloy coating in the steel sheet inner layer direction. A volume fractions of ferrite or not-tempered martensite (hereinafter, referred to as just "martensite") obtained by the above observation represented a volume fraction of the steel sheet. Namely, the volume fractions of ferrite and martensite were specified by; preparing SEM photographs of a cross-sectional microstructure image with the magnification from 1000 to 3000, judgment of ferrite and martensite by visual observation of the SEM photographs, and measuring an area occupied by ferrite and martensite through image analysis. The obtained results were considered to be a volume fraction of ferrite phase.

An amount of retained austenite was measured as below; a testpiece was subjected to grinding up to a position of 0.1 mm from a surface of the steel sheet in the cross-sectional direction as stated above, and then chemical polishing further 0.1 mm. On this grinded and polished surface, by means of an X-ray diffractometer utilizing Ka line of Mo, integrated intensities were measured for (200), (220) and (311) faces of FCC iron and (200), (211) and (220) faces of BCC iron. From the above measurements, a volume fraction of retained austenite was calculated, representing a volume fraction thereof. In addition, regarding ferrite phase within an observation field, average crystallized grain diameters were calculated and shown as "Crystallized grain diameter" in Table 3.

(2) Tensile properties

A tensile test was carried out in accordance with JIS Z 2241 to evaluate yield point (YP), tensile strength (TS) and elongation (EL) respectively of a No. 5 test sample prepared according to JIS Z 2201 with the longitudinal (tensile) direction thereof being C direction that is orthogonal to the rolling direction.

(3) Critical bending radius

The measurement was executed based on a V-block bend method according to JIS Z2248. It was judged by visual observation at an outside of a bending-processed portion, by confirming if cracks had occurred or not, for obtaining the minimum bending radius with no cracks generated, which was considered as the critical bending radius. The testpiece was 30 mm in width. And 30 testpieces of each steel type were subjected to the test. The testpiece was sheared into a rectangular being 100 mm in longitudinal and 32 mm in width. The obtained specimens were further subjected to mechanical polishing of 1 mm per one side, for achieving the width of 30 mm. The longitudinal direction of the testpiece was defined to be C direction. The testpieces were collected consecutively in the steel sheet widthwise direction. It was impossible to collect all of the 30 testpiece in one line being orthogonal to C direction, therefore collection thereof was made over a plurality of lines. The minimum bending radium, where no cracks had occurred in all 30 pieces, was defined to be the critical bending radius. The case was judged as good in bending property, where the following relation was satisfied: Critical bending radius $\leq$ 1.5t (t: Sheet thickness).

(4) Nano-hardness

At a nano-indentation test by means of TriboScope of Hysitron Corporation, the nano-hardness was measured under a load of 1000 $\mu$N and at an interval from 2 $\mu$m to 3 $\mu$m in an area between 50 $\mu$m to 500 $\mu$m from a surface of the steel sheet. The number of measuring points was within the range from 50 points to 400 points. From the measured hardness, the hardness difference was calculated between adjacent measuring points. Then, a boundary length was obtained, where each interphase hardness difference between adjacent phases was within 4 GPa, and a ratio of the total boundary length obtained as above relative to the total boundary length of measured portion was calculated. Here, the boundary between phases was considered to reside linearly in the center between the measuring points.

(Table 3)

Table 3

| Test No. | Steel type | Ferrite phase | | Total volume fraction of martensite and retained γ (%) | Ratio of interphases each having an interphase nano-hardness difference within 4 GPa (%) | Mechanical properties | | | | | Remarks |
|---|---|---|---|---|---|---|---|---|---|---|---|
| | | Volume fraction (%) | Crystallized gain diameter (μm) | | | YP (MPa) | TS (MPa) | El (%) | Critical bending radius (mm) | Critical bending radius Sheet thickness | |
| 1 | A | 65 | 8 | 1.0 | 92 | 725 | 982 | 14.1 | 1.0 | 0.7 | Inventive example |
| 2 | B | 59 | 7 | 1.9 | 94 | 752 | 1001 | 15.2 | 0.8 | 0.5 | Inventive example |
| 3 | B | 62 | 8 | 11.1 | 87 | 693 | 1024 | 15.9 | 2.5 | 1.8 | Comparative example |
| 4 | C | 51 | 6 | 4.2 | 93 | 822 | 1092 | 13.8 | 1.5 | 1.1 | Inventive example |
| 5 | C | 57 | 9 | 12.9 | 82 | 803 | 1108 | 14.0 | 3.0 | 2.1 | Comparative example |
| 6 | D | 59 | 7 | 2.7 | 95 | 726 | 995 | 15.2 | 1.0 | 0.7 | Inventive example |
| 7 | D | 64 | 12 | 4.3 | 85 | 743 | 1022 | 16.4 | 2.5 | 1.8 | Comparative example |
| 8 | E | 57 | 7 | 1.8 | 94 | 724 | 990 | 16.3 | 1.0 | 0.7 | Inventive example |
| 9 | E | 6 | 8 | 14.6 | 87 | 800 | 1021 | 16.2 | 2.5 | 1.8 | Comparative example |
| 10 | E | 83 | 6 | 11.2 | 82 | 752 | 846 | 12.1 | 3.0 | 2.1 | Comparative example |
| 11 | F | 45 | 9 | 0.8 | 96 | 873 | 1002 | 12.6 | 1.0 | 0.7 | Inventive example |
| 12 | F | 75 | 6 | 1.2 | 90 | 732 | 920 | 14.2 | 1.0 | 0.7 | Comparative example |
| 13 | G | 36 | 8 | 8.2 | 91 | 884 | 1086 | 12.1 | 1.5 | 1.1 | Inventive example |

| Test No. | Steel type | Ferrite phase | | Total volume fraction of martensite and retained γ (%) | Ratio of interphases each having an interphase nano-hardness difference within 4 GPa (%) | Mechanical properties | | | | | Remarks |
|---|---|---|---|---|---|---|---|---|---|---|---|
| | | Volume fraction (%) | Crystallized gain diameter (μm) | | | YP (MPa) | TS (MPa) | El (%) | Critical bending radius (mm) | Critical bending radius Sheet thickness | |
| 14 | G | <u>78</u> | 12 | 2.8 | 90 | 714 | 946 | 14.0 | 2.0 | 1.4 | Comparative example |
| 15 | H | 42 | 9 | 2.3 | 94 | 721 | 1025 | 13.3 | 0.5 | 0.4 | Inventive example |
| 16 | H | 44 | 9 | <u>16.0</u> | 62 | 865 | 1141 | 13.4 | 3.5 | 25 | Comparative example |
| 17 | I | 41 | 8 | 1.8 | 96 | 871 | 1054 | 11.7 | 1.0 | 0.7 | Inventive example |
| 18 | J | 53 | 6 | 6.8 | 95 | 795 | 1026 | 12.8 | 1.3 | 0.9 | Inventive example |
| 19 | J | 54 | 6 | <u>13.9</u> | 84 | 763 | 1052 | 14.2 | 2.5 | 1.8 | Comparative example |
| 20 | K | 64 | 7 | 4.4 | 92 | 831 | 1049 | 16.3 | 1.3 | 0.9 | Inventive example |
| 21 | L | 66 | 8 | 7.3 | 91 | 787 | 994 | 16.1 | 1.5 | 1.1 | Inventive example |
| 22 | M | 57 | 7 | 2.2 | 94 | 773 | 1001 | 14.2 | 1.0 | 0.7 | Inventive example |
| 23 | N | 54 | 4 | 2.1 | 95 | 821 | 1018 | 12.1 | 0.5 | 0.4 | Inventive example |
| 24 | O | 58 | 3 | 1.9 | 93 | 830 | 999 | 12.0 | 0.5 | 0.4 | Inventive example |
| 25 | P | 54 | 5 | 2.1 | 92 | 864 | 1034 | 11.0 | 1.0 | 0.7 | Inventive example |
| 26 | Q | 37 | 8 | 9.1 | 91 | 924 | 1105 | 10.8 | 1.5 | 1.1 | Inventive example |

EP 2 799 568 A1

| Test No. | Steel type | Ferrite phase | | Total volume fraction of martensite and retained γ (%) | Ratio of interphases each having an interphase nano-hardness difference within 4 GPa (%) | Mechanical properties | | | | | Remarks |
|---|---|---|---|---|---|---|---|---|---|---|---|
| | | Volume fraction (%) | Crystallized gain diameter (μm) | | | YP (MPa) | TS (MPa) | El (%) | Critical bending radius (mm) | Critical bending radius Sheet thickness | |
| 27 | R | 48 | 7 | 2.3 | 92 | 810 | 1041 | 14.3 | 1.5 | 1.1 | Inventive example |
| 28 | S | 51 | 6 | 1.8 | 94 | 843 | 1010 | 13.3 | 1.5 | 1.1 | Inventive example |
| 29 | T | 50 | 7 | 2.1 | 91 | 832 | 1025 | 13.4 | 1.3 | 0.9 | Inventive example |
| 30 | U | 43 | 6 | 1.9 | 92 | 868 | 1053 | 12.4 | 1.0 | 0.7 | Inventive example |
| 31 | V | 54 | 6 | 22 | 92 | 784 | 1003 | 12.8 | 1.3 | 0.9 | Inventive example |
| 32 | W | 50 | 7 | 2.5 | 93 | 762 | 1015 | 13.1 | 1.0 | 0.7 | Inventive example |
| 33 | X | 46 | 8 | 2.1 | 94 | 858 | 1022 | 12.7 | 0.5 | 0.4 | Inventive example |
| 34 | Y | <u>84</u> | <u>13</u> | 1.8 | 92 | 545 | 732 | 19.2 | 1.0 | 0.7 | Comparative example |
| 35 | <u>Z</u> | 72 | <u>16</u> | 0.4 | 83 | 442 | 625 | 25.1 | 2.0 | 1.4 | Comparative example |
| 36 | AA | 51 | 3 | 6.0 | 94 | 762 | 1073 | 14.2 | 1.0 | 0.7 | Inventive example |
| 37 | AB | 65 | 8 | 9.2 | 90 | 624 | 1052 | 16.5 | 2.0 | 1.4 | Inventive example |
| 38 | AC | 64 | 5 | 8.3 | 92 | 643 | 1012 | 16.7 | 1.5 | 1.1 | Inventive example |
| 39 | AD | 53 | 2 | 2.4 | 96 | 684 | 1030 | 16.2 | 0.5 | 0.4 | Inventive example |

EP 2 799 568 A1

| Test No. | Steel type | Ferrite phase | | Total volume fraction of martensite and retained $\gamma$ (%) | Ratio of interphases each having an interphase nano-hardness difference within 4 GPa (%) | Mechanical properties | | | | | Remarks |
|---|---|---|---|---|---|---|---|---|---|---|---|
| | | Volume fraction (%) | Crystallized gain diameter ($\mu$m) | | | YP (MPa) | TS (MPa) | El (%) | Critical bending radius (mm) | Critical bending radius Sheet thickness | |
| 40 | AE | 60 | 3 | 5.6 | 95 | 692 | 1008 | 16.1 | 0.5 | 0.4 | Inventive example |

It will be appreciated from Table 3 that each inventive example of the steel sheet according to the present invention satisfies the condition: TS ≥ 980 MPa, and exhibits an excellent bending property by simultaneously satisfying the condition: critical bending radius / sheet thickness ≤ 1.5.

INDUSTRIAL APPLICABILITY

The ultra high-strength steel sheet according to the present invention, having high tensile strength and high bending property, can be thus advantageously utilized as members for automobile components, and also in the fields of construction, domestic electrical appliance, etc. requiring components that are formed by bending.

**Claims**

1. A high-strength steel sheet having a chemical composition including by mass%: C: 0.05 % to 0.3 %, Si: 0.01 % to 2 %, Mn: 1.0 % to 3.5 %, P: 0.040 % or less, S: 0.0050 % or less, Al: 0.001 % to 1 % and N: 0.0060 % or less, and the balance being Fe and incidental impurities,
the steel sheet further having a microstructure, wherein an average crystallized grain diameter of ferrite phase is 10 μm or less, a volume fraction of ferrite phase is 30 % or more and 70 % or less and also a volume fraction of the total of martensite and retained austenite phases is 10 % or less, and a ratio of interphases each having an interphase nano-hardness difference within 4 GPa is 90 % or more.

2. The high-strength steel sheet according to Claim 1, further including by mass%, at least one element selected from Cr: 2.0 % or less, Mo: 0.50 % or less, Ni: 1.0 % or less, Cu: 1.0 % or less, and B: 0.02 % or less.

3. The high-strength steel sheet according to Claim 1 or 2, further including by mass%, at least one element selected from Ti: 0.10 % or less, Nb: 0.10 % or less and V: 0.10 % or less.

4. The high-strength steel sheet according to any one of Claims 1 to 3, further including by mass%, at least one element selected from Ca: 0.01 % or less and REM: 0.01 % or less.

5. The high-strength steel sheet according to any one of Claims 1 to 4, further comprising a hot-dip galvanizing layer on a surface of the steel sheet.

6. A method for manufacturing a high-strength steel sheet, the method comprising a series of steps including preparing a steel slab having the chemical composition according to any one of Claims 1 to 4, subjecting the steel slab to hot rolling, coiling, cold rolling and then annealing, wherein:

the hot rolling is executed under the conditions of a slab heating temperature from 1000 °C to 1300 °C and a hot-rolling finisher delivery temperature from 850 °C to 950 °C;
the hot rolling is followed by cooling with an average cooling rate from 5 °C/sec to 200 °C/sec within a temperature range from the hot-rolling finisher delivery temperature to a temperature 100 °C lower than the hot-rolling finisher delivery temperature,
the coiling is performed within a temperature range from 400 °C to 650 °C, and is followed by the cold rolling;
the annealing is performed by heating up to an annealing temperature range from 730 °C to 900 °C, holding the obtained steel sheet for 10 sec to 500 sec within the annealing temperature range, followed by a controllable cooling with an average cooling rate within a range from 1 °C/sec to 50 °C/sec down to 500 °C, and further cooling down to 300 °C or less;
the method further including reheating up to 600 °C or less and tempering under a condition where a tempering parameter λ defined by Formula (1) below is 13000 or more;

$$\lambda = (T + 273) \times (\log(t) + 20) \cdots\cdots\cdots (1)$$

where, T: reheating temperature (°C) and t: holding time at the reheating temperature (sec).

7. The method for manufacturing a high-strength steel sheet according to Claim 6, wherein, instead of the controllable cooling down to 500 °C with the average cooling rate within the range from 1 °C/sec to 50 °C/sec and cooling further down to 300 °C or less, the method comprises carrying out a controllable cooling down to 500 °C with an average cooling rate within the range from 1 °C/sec to 50 °C/sec, and subsequently a hot-dip galvanizing treatment and optionally a galvannealing treatment, followed by cooling down to 300 °C or less.

# FIG. 1

Definition of Interphase Nano-Hardness Difference,
and Measurement Example 1 (Test No. 1)

Nano-hardness values measured for 50 points at each grid center.

Interphase boundary lines defined by the invention.

Boundaries with interphase nano-hardness difference exceeding 4 GPa.

| 1.3 | 2.2 | 3.4 | 8.4 | 4.2 | 3.6 | 2.8 | 3.2 | 1.8 | 2.2 |
|-----|-----|-----|-----|-----|-----|-----|-----|------|-----|
| 2.2 | 3.5 | 5.2 | 8.3 | 6.4 | 3.3 | 3.5 | 4.2 | 10.6 | 2.4 |
| 4.3 | 2.2 | 5.4 | 5.8 | 3.8 | 4.6 | 3.9 | 2.7 | 2.4 | 2.6 |
| 3.6 | 4.3 | 5.8 | 5.2 | 4.4 | 4.0 | 6.8 | 2.3 | 1.9 | 2.2 |
| 3.6 | 3.5 | 3.7 | 4.1 | 3.0 | 3.3 | 3.4 | 4.5 | 3.6 | 3.1 |

The ratio of interphases each having an interphase nano-hardness difference within 4 GPa $= \dfrac{78}{85} \times 100 = 92\%$

# *FIG. 2*

Measurement Example 2 for Interphase Nano-Hardness Difference (Test No. 20)

| 3.8 | 3.6 | 2.4 | 3.2 | 6.9 | 4.3 | 3.7 | 3.1 | 4.3 | 3.2 |
|---|---|---|---|---|---|---|---|---|---|
| 3.1 | 4.2 | 3.7 | 6.4 | 3.6 | 2.5 | 2.9 | 3.5 | 5.3 | 3.1 |
| 2.8 | 7.1 | 3.2 | 5.8 | 3.1 | 4.8 | 4.6 | 3.2 | 2.1 | 2.2 |
| 2.2 | 8.5 | 2.5 | 8.1 | 2.9 | 4.0 | 6.3 | 2.7 | 4.4 | 5.8 |
| 3.4 | 3.6 | 2.5 | 5.3 | 2.9 | 2.6 | 2.2 | 3.3 | 3.4 | 5.6 |

The ratio of interphases each having an interphase nano-hardness difference within 4 GPa $= \dfrac{78}{85} \times 100 = 92\%$

## INTERNATIONAL SEARCH REPORT

| | International application No. |
|---|---|
| | PCT/JP2012/008307 |

**A. CLASSIFICATION OF SUBJECT MATTER**
*C22C38/00*(2006.01)i, *B21B3/00*(2006.01)i, *C21D9/46*(2006.01)i, *C22C38/06* (2006.01)i, *C22C38/58*(2006.01)i, *C23C2/02*(2006.01)i, *C23C2/06*(2006.01)i, *C23C2/28*(2006.01)i
According to International Patent Classification (IPC) or to both national classification and IPC

**B. FIELDS SEARCHED**

Minimum documentation searched (classification system followed by classification symbols)
C22C1/00-49/14, B21B3/00, C21D9/46, C23C2/02, C23C2/06, C23C2/28

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-231377 A (Sumitomo Metal Industries, Ltd.), 17 November 2011 (17.11.2011), (Family: none) | 1–7 |
| A | JP 2011-179050 A (Kobe Steel, Ltd.), 15 September 2011 (15.09.2011), (Family: none) | 1–7 |
| A | JP 2010-255091 A (Kobe Steel, Ltd.), 11 November 2010 (11.11.2010), & EP 2415891 A1 & WO 2010/114131 A1 & CN 102341518 A | 1–7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 February, 2013 (22.02.13) | 05 March, 2013 (05.03.13) |

| Name and mailing address of the ISA/ Japanese Patent Office | Authorized officer |
|---|---|
| Facsimile No. | Telephone No. |

Form PCT/ISA/210 (second sheet) (July 2009)

**EP 2 799 568 A1**

**INTERNATIONAL SEARCH REPORT**

| International application No. |
| --- |
| PCT/JP2012/008307 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-308717 A (Sumitomo Metal Industries, Ltd.), 25 December 2008 (25.12.2008), (Family: none) | 1-7 |
| A | JP 2006-22390 A (Sumitomo Metal Industries, Ltd.), 26 January 2006 (26.01.2006), (Family: none) | 1-7 |
| A | JP 2002-53935 A (Kawasaki Steel Corp.), 19 February 2002 (19.02.2002), & US 2003/0047256 A1 & US 2003/0145920 A1 & US 2003/0188811 A1 & EP 1193322 A1 & EP 1571229 A1 & EP 1571230 A1 & WO 2001/064967 A1 & DE 60121266 D & DE 60125253 D & DE 60127879 D & CA 2368504 A & TW 550296 B & CN 1366559 A | 1-7 |

Form PCT/ISA/210 (continuation of second sheet) (July 2009)

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2175839 A
- JP 5195149 A
- JP 10130782 A
- JP 2005273002 A
- JP 2009167467 A
- JP 2008280608 A
- JP 2006052458 B